# EUROPÄISCHE PATENTANMELDUNG

(11) **EP 2 434 178 A1**
(43) Veröffentlichungstag der Anmeldung: **28.03.2012**
(21) Anmeldenummer: 11182600.4
(22) Anmeldetag: 23.09.2011
(51) Int. Cl.: F16G 11/10, F16G 11/12

(54) **Seilspannvorrichtung**

(30) Priorität: 28.09.2010 DE 202010008655 U
(71) Anmelder: steute Schaltgeräte GmbH & Co. KG, 32584 Löhne (DE)
(72) Erfinder: Twellmann, Ralf, 31683 Obernkirchen (DE); Oberländer, Matthias, 32549 Bad Oeynhausen (DE)
(74) Vertreter: Habbel, Ludwig

(57) **Zusammenfassung**

Die Erfindung bezieht sich auf eine Seilspannvorrichtung (1), mit einem Gehäuse (2), und einem durch das Gehäuse verlaufenden Führungskanal (7) für ein Seil (6), und mit einer Befestigungsvorrichtung (12) zur Festlegung des Seils, und mit einer Klemmvorrichtung (14), die sich winklig zu dessen Längsachse in den Führungskanal erstreckt, wobei die Klemmvorrichtung durch eine Feder (19) belastet auf das Seil winklig zu dessen Längsachse drückt, und relativ zum Gehäuse zwischen einer das Seil klemmenden Klemmstellung und einer das Seil freigebenden Freigabestellung beweglich ist, und wobei mittels einer Handhabe gegen die Wirkung der Feder aus der Klemmstellung in die Freigabestellung beweglich ist.

## Beschreibung

Die Erfindung betrifft eine Seilspannvorrichtung.

Seilspannvorrichtungen werden beispielsweise bei Sicherheits-Seilschaltern verwendet. Die Seile sind beispielsweise dort gespannt, wo der Zugang zu bestimmten Bereichen begrenzt oder verhindert werden soll, beispielsweise in der Nähe von gefährlichen Maschinen. Die Seilspanner ermöglichen eine Längenjustage des betreffenden Seils, beispielsweise durch einen Verstellabschnitt, der mittels Gewinde die entsprechende Längenanpassung ermöglicht. Die Handhabung derartiger Seilspannvorrichtungen ist umständlich, weil für einen vergleichsweise kurzen Verstellweg vergleichsweise viele Umdrehungen mithilfe des Gewindes erforderlich sind.

Der Erfindung liegt die Aufgabe zugrunde, eine Seilspannvorrichtung anzugeben, die einen sicheren Halt des Seils in unterschiedlichen Spannstellungen sowie eine einfache Handhabung bei der Einstellung der gewünschten Seilspannung ermöglicht.

Diese Aufgabe wird durch eine Seilspannvorrichtung mit den Merkmalen des Anspruchs 1 gelöst.

Die Erfindung schlägt mit anderen Worten vor, das Seil durch einen Führungskanal innerhalb eines Gehäuses zu führen, wobei ein Abschnitt des Führungskanals unterbrochen ist, so dass sich eine Klemmvorrichtung in diesen Abschnitt erstrecken kann und auf das Seil einwirkt. Federbelastet drückt die Klemmvorrichtung in einer Richtung, die schräg oder quer zu der Längsrichtung des Führungskanals bzw. des Seils verläuft.

Dabei ist die Klemmvorrichtung beweglich gelagert, so dass sie zwischen einer Klemmstellung und einer Freigabestellung beweglich ist. Die Klemmvorrichtung ist mittels einer Handhabe durch den Benutzer der Seilspannvorrichtung bedienbar, um die gewünschte Bewegung durchzuführen, wobei die Klemmvorrichtung durch eine Feder belastet stets ihre Klemmstellung einnimmt und gegen die Wirkung der Feder vom Benutzer in die Freigabestellung bewegt werden kann. Auf diese Weise ist durch einfache Betätigung der Handhabe die Klemmwirkung des Seils aufgehoben und das Seil kann innerhalb des Führungskanals hin oder her verschoben werden, um auf diese Weise die gewünschte Seilspannung einzustellen.

Vorteilhaft kann die Klemmvorrichtung einen Stößel aufweisen, der den Führungskanal durchsetzt. Der Stößel ist seinerseits mit einer Ausnehmung versehen, so dass das Seil durch den Führungskanal und den Stößel und anschließend wieder weiter durch den Führungskanal verlaufen kann. Eine Beweglichkeit des Stößels bewirkt daher eine zweifache Richtungsumlenkung des Seils und somit eine besonders starke Klemmwirkung, die zu einer zuverlässigen Fixierung des Seils in seiner zuvor eingestellten Position bzw. Seilspannung führt.

Der erwähnte Stößel wird vorzugsweise durch die Feder in einer solchen Richtung beaufschlagt, dass der Stößel aus dem Gehäuse gedrückt wird. Auf diese Weise kann durch Druck von außen auf den Stößel in besonders einfacher Weise die Seilspannvorrichtung bedient werden und das Seil zu Gunsten einer Verstellung der Seilspannung freigegeben werden.

Vorteilhaft kann der Stößel aus dem Gehäuse herausragen und dort einen Gewindeabschnitt aufweisen, so dass außerhalb des Gehäuses auf den Gewindeabschnitt des Stößels eine Mutter vorgesehen sein kann, die entsprechend dem Verlauf des Gewindes verstellbar ist. Somit ergibt sich die Möglichkeit, mittels der Mutter den Stößel in der Weise zu sichern, dass er nicht versehentlich in das Gehäuse eingedrückt werden kann und somit in die Freigabestellung gelangt, in welcher ggf. unbeabsichtigt die Seilspannung verändert werden könnte. Zudem kann die Mutter als Handhabe genutzt werden, da sie eine gegenüber dem Gewindeabschnitt des Stößels größere Fläche aufweist und somit besonders bequem bedient und gedrückt werden kann.

Vorteilhaft kann die Mutter als Rändelmutter ausgestaltet sein, so dass eine werkzeuglose Bedienung der Seilspannvorrichtung ermöglicht wird. So kann die Mutter auf einfache Weise gelockert werden und dementsprechend einen gewissen Hubweg des Stößels in das Gehäuse hinein ermöglichen, so dass anschließend der Stößel in die Freigabestellung gedrückt und die Seilspannung verändert werden kann. Nach Erreichen der gewünschten Seilspannung kann die Mutter ebenfalls werkzeuglos wieder angezogen werden, so dass der Stößel in seiner Klemmstellung fixiert ist.

Vorteilhaft kann die Mutter am Stößel verliersicher gehalten sein. Dies kann beispielsweise dadurch ermöglicht sein, dass der Stößel mit einem Querstift versehen ist, der den Verstellweg der Mutter begrenzt, oder dass der Stößel bzw. das Gewinde des Gewindeabschnittes verquetscht ist, so dass über diese Quetschstelle hinaus die Rändelmutter nicht verstellt werden kann und auf diese Weise sichergestellt ist, dass die Mutter nicht vom Gewindeabschnitt des Stößels vollständig abgeschraubt werden kann.

Vorteilhaft kann vorgesehen sein, dass die Mutter mittels einer Kontermutter auf dem Gewindeabschnitt festgelegt werden kann.

Die Kontermutter kann ihrerseits nicht als Rändelmutter ausgestaltet sein, sondern lediglich mittels eines Werkzeugs bedienbar ausgestaltet sein. Sie kann einerseits die verliersichere Halterung der Rändelmutter am Stößel bewirken und insbesondere eine versehentliche bzw. unbefugte Verstellbarkeit der Rändelmutter verhindern, indem für eine Verstellung der Rändelmutter zunächst ein Werkzeug eingesetzt werden muss, um die Kontermutter zu lösen.

Zusätzlich zu der Klemmvorrichtung ist eine zweite Festlegung des Seils vorgesehen, die im Unterschied zu der lösbaren Klemmvorrichtung als Befestigungsvorrichtung bezeichnet ist, da sie zu einer als fest oder endgültig bezeichneten Festlegung des Seils dient. Dies bedeutet im Rahmen des vorliegenden Vorschlages, dass die Befestigungsvorrichtung zwar ein Lösen des Seils mithilfe von Werkzeug ermöglichen kann, dass dieses Lösen des Seils jedoch nicht im alltäglichen Gebrauch vorgesehen ist, so dass diese zweite Befestigungsvorrichtung vorteilhaft innerhalb des Gehäuses angeordnet und von außen nicht betätigbar ist.

Bei der Installation des Sicherheitsseilschalters bzw. bei der Montage der Seilspannvorrichtung an dem Seil kann daher vorgesehen sein, das Seil zunächst durch den Führungskanal der Seilspannvorrichtung zu führen und anschließend mit seinem freien Ende in der Befestigungsvorrichtung festzulegen. Dazu ist das Gehäuse vorzugsweise geöffnet. Anschließend wird das Gehäuse geschlossen und beispielsweise verrastet oder verschraubt, so dass nun die Befestigungsvorrichtung unzugänglich ist. Die gewünschte Seilspannung wird dann unter Verwendung der von außen betätigbaren Klemmvorrichtung eingestellt. Diese Einstellung der Seilspannung kann besonders einfach und schnell erfolgen, da sie nicht durch eine Gewindeverstellung erfolgen muss.

Die Festlegung der Befestigungsvorrichtung innerhalb des Gehäuses kann beispielsweise dadurch erfolgen, dass das Gehäuse um diese Befestigungsvorrichtung herum gespritzt wird, so dass ein einteiliges, geschlossenes Gehäuse vorgesehen ist, in welchem die zweite Befestigungsvorrichtung und damit das eine Seilende von außen unzugänglich angeordnet ist. Vorteilhaft kann jedoch vorgesehen sein, dass das Gehäuse mehrteilig ausgestaltet ist und beispielsweise durch lösbare Rastverbindungen, durch die Verwendung von Schrauben o. dgl. geöffnet werden kann, so dass beispielsweise sowohl die Klemmvorrichtung als auch die Befestigungsvorrichtung des Seils bei geöffnetem Gehäuse zugänglich sind. Zudem wird so herstellerseitig die Montage der Bauteile zur Erstellung der Seilspannvorrichtung erleichtert.

Vorteilhaft kann die Seilspannvorrichtung ein Haltemittel aufweisen, welches die Festlegung der Seilspannvorrichtung an einem Vorsprung ermöglicht. So kann beispielsweise das Haltemittel als Haken, Öse o. dgl. ausgestaltet sein. Auf diese Weise ist es möglich, nicht nur mithilfe einer Seilschlaufe die Seilspannvorrichtung an dem erwähnten Vorsprung festzulegen, so dass der nutzbare Verstellbereich der Seilspannvorrichtung vergrößert wird und beispielsweise eine Seilführung möglich ist, bei welcher das Seil durch die Klemmvorrichtung und bis zu der erwähnten zweiten Befestigungsvorrichtung in einer Schlaufe geführt ist, wobei diese Schlaufe außerhalb des Gehäuses der Seilspannvorrichtung verläuft. Dabei kann das Seil so weit verstellt werden, dass die Schlaufe praktisch am Gehäuse fest anliegt, um die maximale Seillänge ausnutzen zu können. In diesem Fall wäre eine Festlegung der Seilspannvorrichtung mithilfe des Seils selbst an einem Vorsprung kaum möglich, so dass in diesem Fall die zusätzlich vorgesehenen Haltemittel zur Befestigung der Seilspannvorrichtung an dem Vorsprung genutzt werden können.

Dabei kann vorteilhaft vorgesehen sein, dass die erwähnten Haltemittel ebenfalls verstellbar am Gehäuse festgelegt sind, insbesondere in einer Richtung verstellbar, die auch entweder vollständig oder zumindest teilweise, also in Form einer Richtungskomponente, in Längsrichtung des Seils verläuft, so dass auf diese Weise der mittels der Seilspannvorrichtung ermöglichte Verstellweg nochmals vergrößert wird und beispielsweise die Haltemittel aus dem Gehäuse heraus oder weiter in das Gehäuse hinein verstellt werden können, um die gewünschte Anpassung der Seilspannung zu ermöglichen.

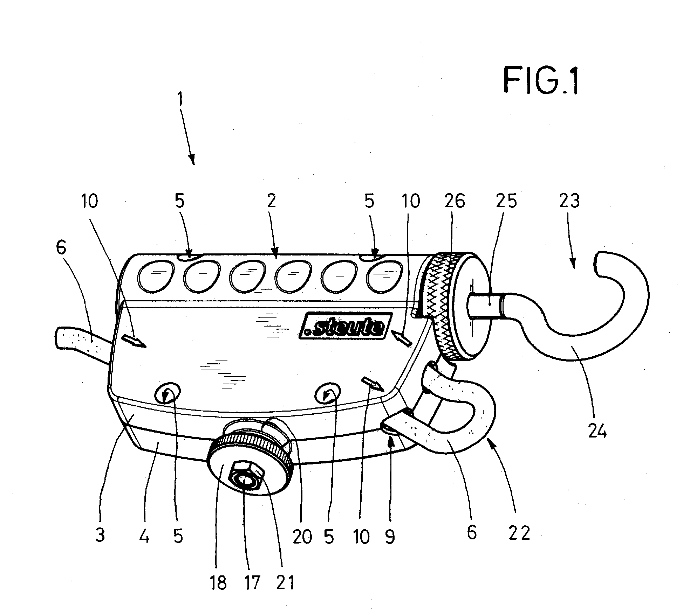

Ein Ausführungsbeispiel der Erfindung wird anhand der rein schematischen Darstellungen nachfolgend näher erläutert. Dabei zeigt
- Fig. 1: eine perspektivische Ansicht von schräg unten auf eine Seilspannvorrichtung, und
- Fig. 2: eine Draufsicht auf die Seilspannvorrichtung von Fig. 1, bei abgenommener oberer Gehäusehälfte.

In den Zeichnungen ist mit 1 jeweils insgesamt eine Seilspannvorrichtung bezeichnet. Diese weist ein Gehäuse 2 auf, mit einer oberen Gehäusehälfte 3 und einer unteren Gehäusehälfte 4, wobei die beiden Gehäusehälften 3 und 4 mittels vier Schrauben, die versenkt angeordnet sind, an den Verschraubungsstellen 5 verbunden sind.

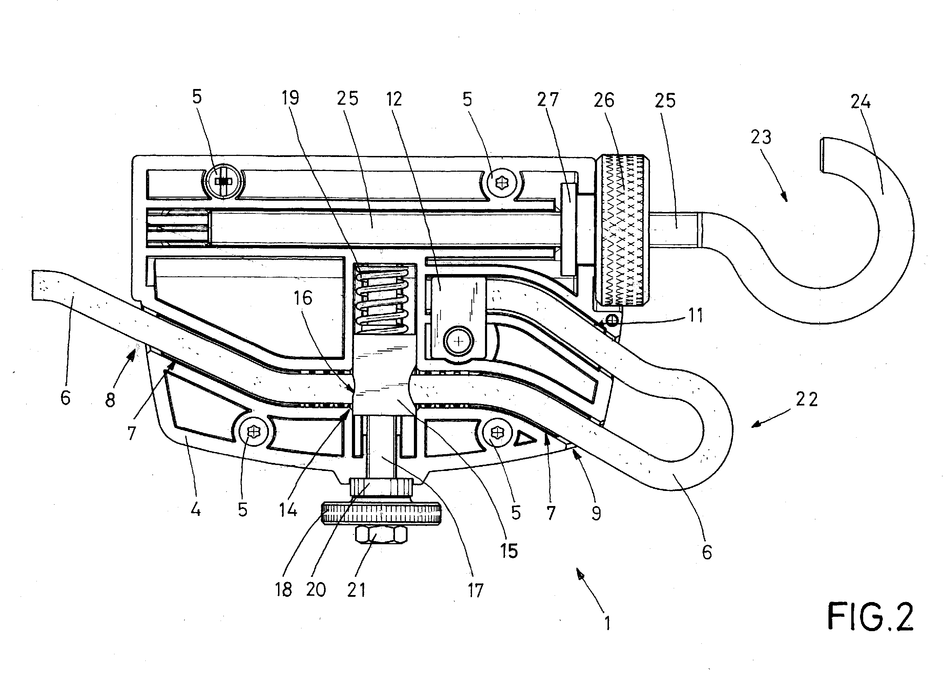

Ein Seil 6 ist durch das Gehäuse 2 geführt, wobei im Inneren des Gehäuses 2 ein aus Fig. 2 ersichtlicher Führungskanal 7 vorgesehen ist, der sich durch das Gehäuse 2 erstreckt und eine Einlassöffnung 8 sowie eine Auslassöffnung 9 für das Seil schafft. Auf der oberen Gehäusehälfte 3 sind Markierungen 10 vorgesehen, die in Form jeweils eines Pfeils ausgestaltet sind und anzeigen, in welcher Richtung das Seil 6 durch das Gehäuse 2 und den daran befindlichen Führungskanal 7 zu führen ist, wenn das Seil 6 mit der Seilspannvorrichtung 1 versehen wird.

Darüber hinaus ist ein zweiter Kanal 11 im Gehäuse 2 vorgesehen, wobei das Seil 6 in diesen zweiten Kanal 11 eingesteckt ist und in diesem zweiten Kanal 11 endet. An diesem Ende ist das Seil 6 mithilfe einer Befestigungsvorrichtung 12 festgelegt, wobei die Befestigungsvorrichtung 12 bei dem dargestellten Ausführungsbeispiel als Seilschelle ausgestaltet ist. Sie ist im Inneren des Gehäuses 2, von außen nicht zugänglich, angeordnet.

Die Seilspannvorrichtung 1 weist eine Klemmvorrichtung 14 auf. Diese Klemmvorrichtung 14 enthält einen Stößel 15, der mit einer Ausnehmung 16 in Form einer Querbohrung versehen ist, wobei sich das Seil 6 durch diese Ausnehmung 16 erstreckt. Abgesehen von dem mittleren Teil des Stößels 15, in welchem die Ausnehmung 16 vorgesehen ist, weist der Stößel 15 einen Gewindeabschnitt 17 auf, der aus dem Gehäuse 2 herausragt und der eine als Rändelmutter ausgestaltete Mutter 18 trägt.

Auf der dem Gewindeabschnitt 17 gegenüberliegenden Seite vom Stößel 15 ist eine Feder 19 vorgesehen, die als Druckfeder ausgestaltet ist und den Stößel aus dem Gehäuse 2 herauszuschieben bestrebt ist. Hierdurch wird eine Klemmkraft auf das Seil 6 ausgeübt, an den Übergangsstellen zwischen dem Stößel 15 und dem Führungskanal 7, so dass das Seil 6 bei entsprechender Auslegung der Federkraft der Feder 19 allein aufgrund dieser federbedingten Klemmwirkung festgelegt ist.

Die Klemmwirkung kann mithilfe der Rändelmutter 18 noch verstärkt werden, indem die Rändelmutter 18 weiter auf den Gewindeabschnitt 17 aufgeschraubt wird. Dabei gerät die Rändelmutter 18 an eine Anlagescheibe 20, und bei weiterem Andrehen der Rändelmutter 18 wird der Stößel 15 mitsamt dem Gewindeabschnitt 17 nach außen aus dem Gehäuse 2 herausgezogen, so dass sich der auf das Seil 6 einwirkende Klemmdruck verstärkt.

Bei zunehmendem Klemmdruck wird die Rändelmutter 18 aufgrund ihrer Anlage an der Anlagescheibe 20 zunehmend schwergängiger, so dass sie automatisch gegen eine ungewollte Verstellung und damit gegen ein ungewolltes Lockern des Seils 6 gesichert ist. Eine zusätzliche Sicherung ist durch eine Kontermutter 21 vorgesehen, so dass die jeweilige Position der Rändelmutter 18 auf dem Gewindeabschnitt 17 in jeder beliebigen Stellung fixiert werden kann.

Während beim Einrichten der Seilspannung die Rändelmutter 18 problemlos von Hand werkzeuglos verstellt werden kann, um problemlos die Seilspannung korrigieren und justieren zu können, ist die endgültige Sicherung der Position der Rändelmutter 18 mithilfe der Kontermutter 21 mithilfe von Werkzeug vorgesehen, so dass dementsprechend eine lediglich mit Werkzeug zu betätigende Ausgestaltung der Kontermutter 21 vorgesehen ist. Auf diese Weise sind ungewollte Verstellungen der Rändelmutter 18, nachdem diese mithilfe der Kontermutter 21 fixiert worden ist, vermieden.

Wenn die Rändelmutter 18 auf dem Gewindeabschnitt 17 vom Gehäuse 2 weg verstellt worden ist, wird ein Hub des Stößels 15 und des Gewindeabschnittes 17 in das Gehäuse 2 hinein ermöglicht, wobei der Hubweg durch die jeweilige Position der Rändelmutter 18 bestimmt ist. Bei einem derartigen Hub gelangt der Stößel 15 von seiner das Seil klemmenden Klemmstellung in eine Freigabestellung, in welcher das Seil 6 mit geringem Widerstand durch den Führungskanal 7 und durch die Ausnehmung 16 im Stößel 15 verschoben werden kann, so dass in dieser Freigabestellung der Klemmvorrichtung 14 eine Justage der Seilspannung möglich ist. Dabei dient die Rändelmutter 18 als vergleichsweise großflächige Handhabe, mit welcher die Klemmvorrichtung 14 problemlos manuell und ohne Verwendung eines Werkzeugs betätigt werden kann.

In der dargestellten Anordnung des Seils 6 bildet diese zwischen dem Führungskanal 7 und dem zweiten Kanal 11 eine Schlaufe 22 aus, so dass das Seil 6 bzw. die Seilspannvorrichtung 1 mittels dieser Schlaufe 22 an irgendeinem Vorsprung eingehängt werden könnte. Um jedoch eine maximale Verstellmöglichkeit für das Seil 6 zu gewährleisten, so dass dieses ggf. keine Schlaufe 22 ausbildet, sind Haltemittel 23 vorgesehen, die das Einhängen der Seilspannvorrichtung 1 in eine Öse oder an einen Vorsprung ermöglichen. Die Haltemittel 23 umfassen einen Haken 24, ein Gewinde 25, welches sich in das Gehäuse erstreckt, und eine Einstellmutter 26, die auf dem Gewinde 25 läuft und dem Gehäuse 2 anliegt. Dabei ist im Gehäuse 2 eine Haltemutter 27 vorgesehen, welche den Haken 24 und das Gewinde 25 gegen das Herausziehen aus dem Gehäuse 2 sichert, wobei in jeder beliebigen Stellung der Haken 24 mittels der Einstellmutter 26, die wie eine Kontermutter gegenüber der Haltemutter 27 wirkt, fixiert werden kann.

## Patentansprüche

1. Seilspannvorrichtung (1),
mit einem Gehäuse (2),
und einem durch das Gehäuse (2) verlaufenden Führungskanal (7) für ein Seil (6),
und mit einer Befestigungsvorrichtung (12) zur Festlegung des Seils (6),
und mit einer Klemmvorrichtung (14), die sich winklig zu dessen Längsachse in den Führungskanal (7) erstreckt, wobei die Klemmvorrichtung (14) durch eine Feder (19) belastet auf das Seil (6) winklig zu dessen Längsachse drückt,
und relativ zum Gehäuse (2) zwischen einer das Seil (6) klemmenden Klemmstellung und einer das Seil (6) freigebenden Freigabestellung beweglich ist,
und mittels einer Handhabe gegen die Wirkung der Feder (19) aus der Klemmstellung in die Freigabestellung beweglich ist.

2. Seilspannvorrichtung nach Anspruch 1,
**dadurch gekennzeichnet,**
**dass** die Klemmvorrichtung (14) einen den Führungskanal (7) durchquerenden Stößel (15) aufweist,
wobei der Stößel (15) eine Ausnehmung (16) aufweist, durch welche das Seil (6) verläuft.

3. Seilspannvorrichtung nach Anspruch 2,
**dadurch gekennzeichnet,**
**dass** der Stößel (15) und die Feder (19) derart zusammenwirken, dass der Stößel (15) durch die Feder (19) aus dem Gehäuse (2) heraus gedrängt wird.

4. Seilspannvorrichtung nach Anspruch 2 oder 3,
**dadurch gekennzeichnet,**
**dass** der Stößel (15) aus dem Gehäuse (2) ragt und dort einen Gewindeabschnitt (17) aufweist,
wobei auf dem Gewindeabschnitt (17) eine Mutter vorgesehen und verstellbar gelagert ist.

5. Seilspannvorrichtung nach Anspruch 4,
**dadurch gekennzeichnet,**
**dass** die Mutter als Rändelmutter (18) ausgestaltet ist.

6. Seilspannvorrichtung nach Anspruch 4 oder 5,
**dadurch gekennzeichnet,**
**dass** die Mutter am Stößel (15) verliersicher gehalten ist.

7. Seilspannvorrichtung nach einem der Ansprüche 4 bis 6, **dadurch gekennzeichnet,**
**dass** die Mutter mittels einer Kontermutter (21) auf dem Gewindeabschnitt (17) festlegbar ist.

8. Seilspannvorrichtung nach einem der vorhergehenden Ansprüche,
**dadurch gekennzeichnet,**
**dass** die zusätzlich zu der Klemmvorrichtung (14) vorgesehene Befestigungsvorrichtung (12) innerhalb des Gehäuses (2) von außen unzugänglich angeordnet ist.

9. Seilspannvorrichtung nach einem der vorhergehenden Ansprüche,
**dadurch gekennzeichnet,**
**dass** das Gehäuse (2) mehrteilig ausgestaltet ist und die Gehäuseteile (3, 4) lösbar miteinander verbunden sind.

10. Seilspannvorrichtung nach einem der vorhergehenden Ansprüche,
**gekennzeichnet durch**
zur Festlegung der Seilspannvorrichtung (1) an einem Vorsprung ausgestaltete Haltemittel (23), wie einen Haken (24) oder eine Öse.

11. Seilspannvorrichtung nach Anspruch 10,
**dadurch gekennzeichnet,**
**dass** die Haltemittel (23) in Längsrichtung des Seils (6) relativ zum Gehäuse (2) verstellbar sind.
